# FASCICULE DE BREVET EUROPEEN

(11) **EP 3 080 451 B1**
(45) Date de publication et mention de la délivrance du brevet: **11.05.2022**
(21) Numéro de dépôt: 14798730.9
(22) Date de dépôt: 30.10.2014
(51) Int. Cl.: F03D 9/17, H02J 3/28, H02J 15/00, F04B 17/02, F15B 1/02, F03B 13/06

(54) **INSTALLATION DE STOCKAGE D'ÉNERGIE, DESTINÉE À ALIMENTER UN RÉSEAU ÉLECTRIQUE**
ENERGIESPEICHERVORRICHTUNG ZUR VERSORGUNG EINES ELEKTRISCHEN NETZES
ENERGIE STORING DEVICE FOR SUPPLYING ENERGY TO AN ELECTRIC GRID

(30) Priorité: 31.10.2013 FR 1360705
(43) Date de publication de la demande: 19.10.2016
(73) Titulaire: Thomas, Pierre Armand, 92800 Puteaux (FR); Tacthys, 29280 Plouzane (FR); Charles, Christian, 29217 Plougonvelin (FR)
(72) Inventeur: THOMAS, Pierre, Armand, F-92800 Puteaux (FR)
(74) Mandataire: Lavoix
(86) Numéro de dépôt international: PCT/EP2014/073380
(87) Numéro de publication internationale: WO 2015/063230

(56) Documents cités:
- DE-A1-102007 022 779
- DE-A1-102011 018 679
- FR-A1- 2 983 921
- US-B1- 7 956 485
- US-B1- 8 492 918

## Description

La présente invention concerne une installation de stockage d'énergie, destinée à alimenter un réseau électrique en énergie électrique. Plus particulièrement, l'invention concerne une installation de stockage d'énergie destinée à être couplée avec un système mécanique de production énergétique, tel qu'un parc éolien.

On rappelle qu'un réseau électrique est un ensemble d'infrastructures, permettant d'acheminer de l'énergie électrique depuis des dispositifs de production vers des lieux de consommation d'électricité.

Un tel réseau électrique est généralement soumis à des pics de consommation, notamment en fonction de l'heure de la journée. De tels pics de consommation nécessitent un acheminement très rapide de réserves conséquentes d'énergie électrique vers les lieux de consommation.

Lorsqu'un dispositif de production produit de l'énergie électrique à partir d'énergie renouvelable, notamment l'énergie du vent ou de la houle, il est difficile d'accommoder la production d'énergie électrique avec les pics de consommation. En effet, la production d'énergie électrique à partir d'énergie renouvelable est très variable, et difficile à anticiper en ce qui concerne sa durée de production et son niveau de puissance.

Ainsi, il est difficile de relier un tel dispositif de production à énergie renouvelable à un réseau électrique, un tel réseau électrique s'accommodant mal avec des capacités de production trop aléatoires ou fluctuant trop rapidement au cours du temps.

Ces difficultés de liaison peuvent entraîner des pertes de réseaux, par exemple des microcoupures ou des coupures durant plusieurs heures. Ainsi, il est généralement nécessaire de prévoir une installation de traitement de l'énergie, s'intercalant entre le dispositif de production et le réseau électrique, afin de permettre une interruption de l'apport d'énergie, ou une dissipation d'énergie en cas d'une installation non débrayable, et/ou de disposer de capacité de stockage d'énergie.

De telles installations de traitement d'énergie sont connues dans l'état de la technique, et comportent généralement des moyens de régulation comprenant de l'électronique de puissance relativement complexe et onéreuse.

Un autre exemple d'installation de stockage d'énergie est décrit dans DE 10 2007 022779. Dans ce document, l'énergie est stockée sous forme d'énergie potentielle, ce qui implique un fort encombrement en hauteur. En outre, ce document décrit également une pompe activée électriquement, ce qui implique, comme précédemment, l'utilisation d'électronique de puissance.

L'invention a notamment pour but de remédier à ces inconvénients, en fournissant une installation de stockage d'énergie permettant d'alimenter un réseau électrique en énergie électrique, propre à gérer des problèmes de coupures de réseau, et cela sans nécessiter d'utiliser de l'électronique de puissance.

A cet effet, l'invention a notamment pour objet une installation de stockage d'énergie, destinée à la fourniture en énergie électrique d'un réseau électrique, caractérisé en ce qu'elle comporte :
- au moins un dispositif de fourniture d'énergie mécanique,
- au moins un réservoir de stockage d'un fluide sous pression,
- au moins une pompe, actionnable par le dispositif de fourniture d'énergie mécanique, chaque pompe étant actionnée directement par l'énergie mécanique issue du dispositif de fourniture d'énergie mécanique correspondant,
- au moins un générateur d'énergie, propre à convertir l'énergie du fluide sous pression en énergie électrique, ledit générateur d'énergie étant propre à être connecté à un réseau électrique pour l'alimenter en énergie électrique,
- un circuit de circulation de fluide, reliant d'une part la pompe au réservoir de stockage, de manière à y injecter du fluide lorsqu'elle est actionnée, et reliant d'autre part le réservoir de stockage au générateur d'énergie, le circuit de circulation comprenant au moins une vanne agencée entre le réservoir de stockage et le générateur d'énergie, ladite vanne étant manoeuvrable entre une position ouverte autorisant l'alimentation du générateur d'énergie électrique en fluide sous pression et une position fermée, interdisant l'alimentation du générateur d'énergie électrique en fluide sous pression.

L'énergie mécanique, fournie par le dispositif de fourniture, est stockée sous la forme d'une énergie autre que de l'énergie électrique, de manière à présenter une plage de fonctionnement plus souple et plus modulable. Plus particulièrement, l'énergie est stockée sous forme de fluide sous pression, pour être transmise au générateur d'énergie lorsque cela est souhaité.

Ainsi, lorsque peu d'énergie électrique est requise dans le réseau, ou en cas de perte de réseau, l'énergie peut être stockée sous forme de fluide sous pression.

En revanche, lorsque de l'énergie électrique est requise dans le réseau, par exemple en cas de pic de consommation, le fluide sous pression est relâché dans le générateur d'énergie électrique en vue de fournir l'énergie électrique au réseau électrique avec un temps de fourniture très rapide, selon des méthodes de raccordement bien connues, notamment des centrales hydrauliques de hautes chutes. De même, l'installation selon l'invention permet d'alimenter le réseau électrique même lorsque le dispositif de fourniture ne fournit pas d'énergie (par exemple en cas d'absence de vent pour une éolienne), en utilisant l'énergie du fluide sous pression stockée.

Enfin, l'installation de stockage selon l'invention permet simultanément de stocker de l'énergie sous forme de fluide sous pression et de produire de l'énergie électrique. L'énergie stockée peut également provenir du réseau électrique, afin de permettre une régulation de la demande en consommation, particulièrement pour les variations importantes de celle-ci entre les heures creuses et les heures de forte demande.

Une installation de stockage d'énergie selon l'invention peut comporter en outre une ou plusieurs des caractéristiques suivantes, prises seules ou selon toutes combinaison techniquement envisageables.
- Le réservoir de stockage comporte au moins un tube de stockage, s'étendant entre une première extrémité, connectée au circuit de circulation pour être reliée d'une part à la pompe et d'autre part au générateur d'énergie, et une seconde extrémité.
- Chaque tube comporte une première partie remplie d'air, et une seconde partie remplie du fluide, les première et seconde parties étant séparées par un organe d'étanchéité mobile, par exemple un piston muni d'un joint d'étanchéité.
- Chaque tube est incliné par rapport à un plan horizontal, de sorte que sa seconde extrémité se trouve au-dessus de sa première extrémité dans une direction verticale, la première partie remplie d'air étant disposée à proximité de cette seconde extrémité.
- L'installation comporte au moins un circuit de circulation de fluide basse pression, reliant une sortie de chaque générateur d'énergie à une entrée de chaque pompe.
- Chaque générateur d'énergie comporte au moins une turbine destinée à être entrainée par le fluide sous pression provenant du réservoir de stockage, par exemple une turbine Pelton.
- L'installation comporte une pluralité de générateurs d'énergie, comprenant des turbines de dimensions différentes, le circuit de circulation étant agencé pour diriger spécifiquement le fluide sous pression vers une ou plusieurs turbines en particulier.
- Chaque pompe est choisie parmi une pompe à plateau ou une pompe triplex.
- Le dispositif de fourniture d'énergie mécanique est alimenté par une énergie renouvelable, et il est par exemple formé par une éolienne, notamment une éolienne à axe vertical.
- Le dispositif de fourniture d'énergie mécanique comporte un arbre de sortie, solidaire d'une couronne dentée, et chaque pompe est actionnée par un pignon entrainé

en rotation par ladite couronne dentée, de préférence par l'intermédiaire d'une roue de réduction dentée.
- L'installation comporte au moins un organe de freinage, relié à la couronne dentée de manière à pouvoir limiter sa vitesse, chaque organe de freinage comportant par exemple au moins un frein magnétique, un frein à courant de Foucault et/ou un frein à disques.
- L'actionnement de chaque pompe est désactivable.
- Le fluide est de l'eau.

L'invention sera mieux comprise à la lecture de la description qui va suivre, donnée uniquement à titre d'exemple et faite en se référant aux figures annexées, parmi lesquelles :
- la figure 1 est une vue en perspective d'une installation de stockage d'énergie selon un exemple de mode de réalisation de l'invention ;
- la figure 2 est une vue en perspective d'un détail de la figure 1, montrant des moyens pour convertir une énergie mécanique fournie en énergie potentielle d'un fluide sous pression.

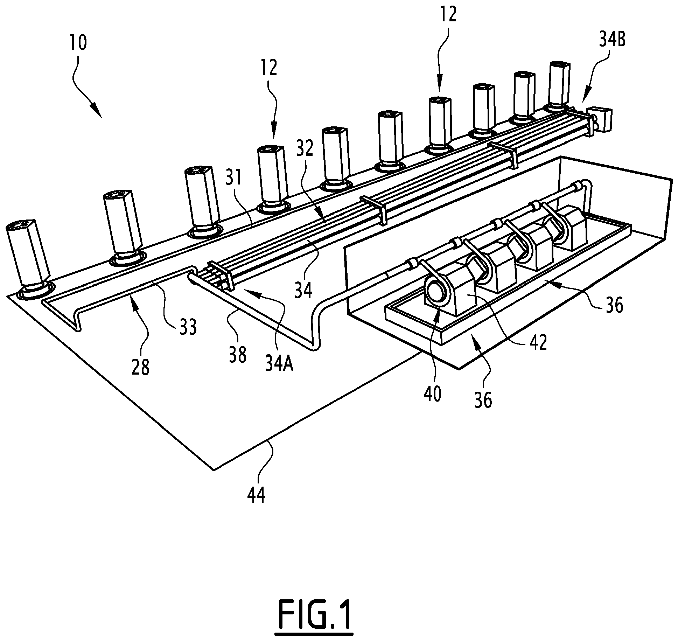

On a représenté, sur la figure 1, une installation de stockage d'énergie 10, destinée l'alimentation d'un réseau électrique en énergie électrique.

L'installation de stockage 10 comporte au moins un dispositif 12 de fourniture d'énergie mécanique. Dans l'exemple de la figure 1, l'installation de stockage 10 comporte dix dispositifs de fourniture d'énergie 12.

Avantageusement, chaque dispositif de fourniture d'énergie 12 est du type alimenté par une énergie renouvelable, Par exemple, chaque dispositif de fourniture d'énergie 12 est une éolienne, et plus particulièrement une éolienne à axe vertical.

En variante, et de manière non limitative, l'installation de stockage 10 pourrait comporter un dispositif de fourniture d'énergie alimenté par une autre énergie renouvelable, par exemple par l'énergie de la houle d'une étendue d'eau, ou par de l'énergie solaire. Conformément à une autre variante, le dispositif de fourniture d'énergie pourrait être formé par tout autre type de dispositif propre à fournir une énergie mécanique.

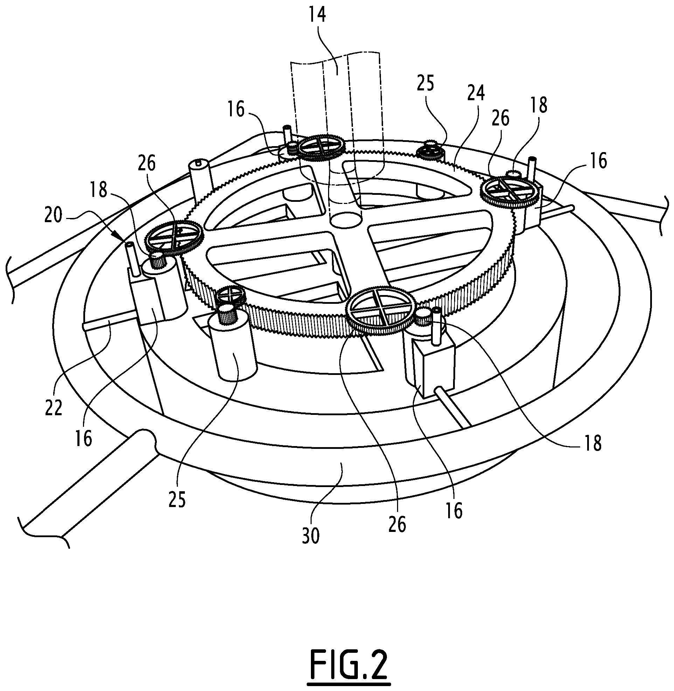

Le dispositif de fourniture d'énergie mécanique 12 comporte un arbre de sortie 14, visible sur la figure 2, et il est propre à entraîner cet arbre de sortie 14 en rotation autour de son axe. Dans le cas où le dispositif de fourniture d'énergie 12 est une éolienne à axe vertical, l'arbre de sortie 14 est directement entrainé en rotation autour de cet axe vertical, grâce à l'énergie du vent.

Comme cela est notamment représenté sur la figure 2, l'installation de stockage 10 comporte, pour chaque dispositif de fourniture d'énergie mécanique 12, au moins une pompe 16 actionnable par ledit dispositif de fourniture d'énergie mécanique 12. Dans l'exemple représenté, quatre pompes 16 sont associées à chaque dispositif de fourniture d'énergie 12.

Chaque pompe 16 est actionnée directement par l'énergie mécanique issue du dispositif de fourniture d'énergie mécanique 12 correspondant. En d'autres termes, le dispositif de fourniture d'énergie mécanique 12 ne génère pas directement d'énergie électrique, et aucune énergie électrique n'est utilisée pour alimenter la pompe 16.

Par exemple, chaque pompe 16 est choisie parmi une pompe à plateau ou une pompe Triplex, bien connues en soi.

On rappelle qu'une pompe à plateau comporte un arbre d'entrainement, solidaire en rotation d'un plateau inclinable, et au moins un piston comportant une extrémité en contact avec ledit plateau, de sorte que la rotation du plateau incliné entraîne une translation du piston parallèlement à l'arbre d'entraînement. La course des pistons dépend l'inclinaison du plateau par rapport à un plan perpendiculaire à l'arbre d'entraînement. En particulier, cette course est nulle si le plateau est parallèle à ce plan, si bien que la pompe peut ainsi être désactivée.

Par ailleurs, on rappelle qu'une pompe triplex comporte également un arbre d'entrainement, entraînant en rotation un vilebrequin muni de trois bielles, chaque bielle étant reliée à un piston respectif pour entraîner ce piston en translation. Les bielles et pistons sont généralement agencés de sorte que, lorsque l'un des trois pistons est en phase d'aspiration, un autre piston est en phase de transition et un dernier piston est en phase de refoulement.

Dans tous les cas, quel que soit le type de pompes choisies, chaque pompe 16 comporte un arbre d'entraînement (non représenté), et au moins un piston (non représenté) permettant l'arrivée et le refoulement d'un fluide, par exemple d'eau. Chaque pompe 16 comporte également un pignon d'entraînement 18 solidaire dudit arbre d'entrainement.

Chaque pompe 16 comporte par ailleurs un conduit 20 d'arrivée de fluide, et un conduit 22 de refoulement du fluide.

Le conduit d'arrivée 20 est avantageusement muni d'un clapet anti-retour (non représenté), empêchant que du fluide contenu dans la pompe ne reflue à travers le conduit d'arrivée. De même, chaque conduit de refoulement 22 est également équipé d'un clapet anti-retour (non représenté), empêchant que le fluide du conduit d'évacuation 22 ne reflue vers la pompe 16.

Lorsque le pignon 18, donc l'arbre d'entraînement, est entraîné en rotation, les pistons de la pompe 16 aspirent tour à tour du fluide depuis le conduit d'arrivée 20, et refoulent du fluide à travers le conduit de refoulement 22.

Chaque pignon 18 est entraîné en rotation par l'arbre de sortie 14 du dispositif de fourniture d'énergie mécanique 12 correspondant. A cet effet, cet arbre de sortie 14 est solidaire d'une couronne dentée 24 à son extrémité inférieure. Chaque pignon 18 est alors entrainé en rotation par cette couronne dentée 24, par exemple par l'intermédiaire d'une roue de réduction dentée 26.

Ainsi, c'est grâce à l'énergie mécanique fournie par le dispositif 12 que chaque pignon 18 est entraîné en rotation, donc que du fluide est aspiré depuis le conduit d'arrivée 20 par la pompe 16 correspondante, et que du fluide est refoulé à travers le conduit d'évacuation 22 de cette pompe 16.

On notera que l'actionnement de chaque pompe 16 est avantageusement désactivable, de manière à interrompre le refoulement de fluide lorsqu'une telle interruption est souhaitée. Par exemple, dans le cas de pompes à plateau, chaque pompe peut être désactivée en alignant le plateau perpendiculairement à l'axe de l'arbre d'entrée de cette pompe, la rotation du plateau n'entraînant alors plus les pistons en translation. Ainsi, il est possible de n'activer qu'une partie des pompes 16, afin d'adapter le nombre de pompes activées à la quantité d'énergie mécanique fournie par le dispositif 12.

Avantageusement, l'installation de stockage 10 comporte, pour chaque couronne dentée 24, au moins un organe de freinage 25, par exemple deux organes de freinage 25, chacun relié à cette couronne dentée 24 de manière à pouvoir limiter sa vitesse. Cet organe de freinage 25 comporte par exemple au moins un frein magnétique, un frein à courant de Foucault et/ou un frein à disque.

L'installation de stockage 10 comporte par ailleurs un circuit 28 de circulation de fluide, connecté au conduit d'évacuation 22 de chaque pompe 16, de sorte que le fluide refoulé par chaque pompe 16 circule dans ce circuit de circulation 28. A cet effet, le circuit de circulation 28 comporte par exemple, pour chaque dispositif de fourniture d'énergie 12, une conduite circulaire 30 s'étendant circonférentiellement autour des pompes 16 liées à ce dispositif de fourniture 12, et communiquant avec le conduit de refoulement 22 de chacune de ces pompes 16.

Ainsi, le fluide refoulé par chacune des pompes 16 est injecté dans cette conduite circulaire 30, pour ensuite circuler dans le circuit de circulation 28 à travers des conduites communes à tous les dispositifs de fourniture d'énergie 12. Plus particulièrement, le circuit de circulation 28 comporte une conduite commune 31 communiquant avec chaque conduite circulaire 30.

L'installation de stockage 10 comporte par ailleurs au moins un réservoir 32 de stockage de fluide sous pression. Les dimensions du réservoir de stockage 32, ainsi que le nombre de réservoirs de stockage 32, influent sur la capacité de production d'énergie électrique par l'installation 10, et seront donc choisies en fonction de la capacité de production souhaitée.

Le circuit de circulation de fluide 28 relie alors chaque pompe 16 à ce réservoir de stockage 32. Plus particulièrement, le circuit de circulation 28 comporte une conduite d'alimentation 33, reliant ladite conduite commune 31 au réservoir de stockage 32.

Ainsi, chaque pompe 16, lorsqu'elle est actionnée, injecte du fluide dans le circuit de circulation 28 en direction de ce réservoir de stockage 32. On comprend qu'en injectant en continu du fluide vers le réservoir de stockage 32, la pression augmente dans ce réservoir de stockage 32.

Le réservoir de stockage 32 comporte au moins un tube de stockage 34, s'étendant entre une première extrémité 34A, communiquant notamment avec la conduite d'alimentation 33, et une seconde extrémité 34B. Chaque tube de stockage 34 est propre à résister à une forte pression, par exemple de 150 bars, ou plus. Par exemple, chaque tube 34 est fretté.

Un clapet anti-retour est généralement agencé entre la conduite d'alimentation 33 et la première extrémité 34A, pour empêcher un reflux du fluide vers cette conduite d'alimentation 33.

Chaque tube de stockage 34 comporte une première partie remplie d'air, et une seconde partie remplie par ledit fluide. Ces première et seconde parties sont séparées par un organe d'étanchéité mobile, par exemple un piston muni d'un joint d'étanchéité, une membrane. En variante, l'air est contenu dans un sac étanche inséré dans le tube.

Chaque tube 34 est incliné de sorte que sa seconde extrémité 34B se trouve au dessus de sa première extrémité 34B dans une direction verticale. Ainsi, la première partie remplie d'air est disposée à proximité de la seconde extrémité 34B, du fait que l'air est plus léger que le fluide, notamment lorsque le fluide est de l'eau.

Lorsque du fluide est introduit dans ce tube de stockage 34, le volume de fluide, donc le volume de la seconde partie, augmente, et le volume de la première partie diminue donc en conséquence. L'air contenu dans cette première partie est ainsi compressé. Cette compression de l'air contribue à la fourniture ultérieure du fluide sous pression. On notera que, lors de l'initialisation de l'installation de stockage 10, l'air de cette première partie est généralement sous une pression initiale, par exemple entre 40 et 50 bars, cette pression augmentant au fur et à mesure que du fluide est introduit dans le réservoir de stockage 32.

De manière optionnelle, chaque tube 34 est protégé contre un éventuel risque de surpression au moyen de vannes de sécurité et de disques de rupture, connus en soi.

L'installation de stockage d'énergie 10 comporte par ailleurs au moins un générateur d'énergie 36, propre à convertir l'énergie du fluide sous pression en énergie électrique. Dans l'exemple représenté sur la figure 1, l'installation de stockage 10 comporte quatre générateurs d'énergie. Chaque générateur d'énergie 36 est propre à être connecté à un réseau électrique pour l'alimenter en énergie électrique.

Ainsi, le circuit de circulation de fluide 28 relie le réservoir de stockage 32 à chaque générateur d'énergie 36, au moyen d'une conduite haute pression 38, connectée à la première extrémité 34A de chaque tube.

Un clapet anti-retour est de manière optionnelle agencé entre la première extrémité 34A et la conduite haute pression 38, afin d'empêcher un reflux du fluide vers le tube 34. Un système d'anti coup de bélier est dans ce cas placé en aval du clapet anti-retour, avec également un dispositif individuel anti coup de bélier pour chaque turbine 40.

Le circuit de circulation 28 comprend par ailleurs au moins une vanne (non représentée) agencée entre le réservoir de stockage 34 et le générateur d'énergie 36, cette vanne étant manoeuvrable entre une position ouverte autorisant l'alimentation du générateur d'énergie 36 en fluide sous pression, et une position fermée interdisant l'alimentation du générateur d'énergie 36 en fluide sous pression.

Plus particulièrement, le circuit de circulation 28 comporte une vanne respective entre la conduite haute pression 38 et chaque générateur d'énergie 36, afin d'alimenter sélectivement l'un ou plusieurs des générateurs d'énergie 36.

Chaque générateur d'énergie 36 comporte au moins une turbine 40, destinée à être entrainée par le fluide sous pression provenant du réservoir 32. Par exemple, chaque turbine 40 est une turbine de type Pelton, bien connue en soi. Chaque turbine 40 entraine une génératrice 42, avantageusement de type synchrone, ou en variante d'un autre type, propre à générer de l'énergie électrique à partir de l'énergie mécanique fournie par la turbine 40. Cette énergie électrique est ensuite fournie au réseau électrique, de manière bien connue en soi.

Avantageusement, les générateurs d'énergie 36 comprennent des turbines 40 de dimensions différentes. Ainsi, il est possible de n'alimenter que le ou les générateurs d'énergie 36 les plus adaptés à des conditions de fonctionnement spécifiques, notamment en fonction de la pression de fluide disponible et/ou de la demande en énergie électrique.

On notera que l'installation 10 comporte par ailleurs au moins un circuit 44 de circulation de fluide basse pression, reliant une sortie de chaque générateur d'énergie 36 à une entrée de chaque pompe 16. Plus particulièrement, la conduite d'arrivée 20 de chaque pompe 16 est reliée à ce circuit basse pression 44. Par exemple, chaque dispositif de fourniture 12 est muni d'un bassin (non représenté) alimenté par le circuit basse pression 44, ce bassin alimentant la conduite d'arrivée 20 de chaque pompe 16 associée à ce dispositif de fourniture 12.

On notera que l'invention n'est pas limitée au mode de réalisation décrit, mais pourrait présenter diverses variantes sans sortir du cadre des revendications.

Il est à noter que le dispositif de stockage d'énergie 10 selon l'invention se distingue de dispositifs classiques notamment par le fait qu'il ne fonctionne pas à partir d'énergie électrique produite, mais directement à partir d'énergie mécanique. En particulier, la pompe 16 est activée directement par l'énergie mécanique produite par le dispositif de fourniture d'énergie mécanique 12, et non pas par l'intermédiaire d'une énergie électrique.

Par ailleurs, comme indiqué précédemment, le dispositif de stockage d'énergie 10 selon l'invention permet simultanément le stockage et la production d'énergie.

Plus particulièrement, le circuit de circulation 28 comporte des vannes dont les positions permettent de définir le mode de fonctionnement du dispositif de stockage 10 :
- un premier mode de fonctionnement dans lequel l'ensemble du fluide issu des pompes 16 est dirigé vers le réservoir de stockage 32, notamment utilisé lorsqu'aucune énergie électrique n'est demandée,
- un second mode de fonctionnement dans lequel l'ensemble du fluide issu des pompes 16 est dirigé vers les générateurs d'énergie 36, notamment utilisé lorsque la demande en énergie électrique est forte, du fluide issu du réservoir de stockage 32 pouvant être ajouté à celui issu des pompes 16 pour augmenter la production en énergie électrique si besoin, et
- un troisième mode de fonctionnement, dans lequel une partie du fluide issu des pompes 16 est dirigée vers le réservoir de stockage 32, et une autre partie est dirigée vers les générateurs d'énergie, notamment lorsque l'énergie mécanique fournie par le dispositif de fourniture 12 est particulièrement importante.

Ainsi, le dispositif de stockage 10 fonctionne comme un condensateur mécanique dans un système global de production d'énergie, en se déchargeant lorsque l'énergie mécanique fournie par le dispositif de fourniture 12 est faible, et se chargeant lorsque l'énergie mécanique fournie par le dispositif de fourniture 12 est forte.

Ce dispositif permet donc au dispositif de fourniture d'énergie mécanique 12 (par exemple, une éolienne) de fonctionner à vitesse optimale, tout en permettant au système de génération d'énergie électrique 36 de fonctionner lui aussi au régime optimal, et ce, sans utilisation d'électronique de puissance très coûteuse, et quelle que soit la charge sur le réseau de distribution.

En effet, il est possible, en débrayant l'alimentation du réservoir de stockage ou des générateurs électriques 36, de réguler la résistance mécanique s'opposant au mouvement rotatif du dispositif de fourniture d'énergie mécanique 12, et/ou la puissance mécanique reçue par les générateurs électriques 36.

Du fait de la simultanéité du stockage et de la production, le dispositif de stockage 10 selon l'invention permet de se passer d'électronique de puissance, et d'optimiser au mieux le rendement d'un système de production d'énergie électrique comportant ce dispositif de stockage 10.

Enfin, le dispositif de stockage d'énergie 10 selon l'invention forme une réserve d'énergie en cas de décrochage local de la production, permettant le lissage de la mise sur le réseau en fonction des pics de demande, et l'optimisation financière du système en fonction de l'évolution du coût de l'énergie électrique.

## Revendications

1. Installation (10) de stockage d'énergie, destinée à la fourniture en énergie électrique d'un réseau électrique, **caractérisé en ce qu'**elle comporte :
- au moins un dispositif (12) de fourniture d'énergie mécanique,
- au moins un réservoir (32) de stockage d'un fluide sous pression,
- au moins une pompe (16), actionnable par le dispositif de fourniture d'énergie mécanique (12), chaque pompe (16) étant actionnée directement par l'énergie mécanique issue du dispositif de fourniture d'énergie mécanique (12) correspondant,
- au moins un générateur d'énergie (36), propre à convertir l'énergie du fluide sous pression en énergie électrique, ledit générateur d'énergie (36) étant propre à être connecté à un réseau électrique pour l'alimenter en énergie électrique,
- un circuit (28) de circulation de fluide, reliant d'une part la pompe (16) au réservoir de stockage (32), de manière à y injecter du fluide lorsqu'elle est actionnée, et reliant d'autre part le réservoir de stockage (32) au générateur d'énergie (36), le circuit de circulation (28) comprenant au moins une vanne agencée entre le réservoir de stockage (32) et le générateur d'énergie (36), ladite vanne étant manoeuvrable entre une position ouverte autorisant l'alimentation du générateur d'énergie électrique (36) en fluide sous pression et une position fermée, interdisant l'alimentation du générateur d'énergie électrique (36) en fluide sous pression.

2. Installation (10) selon la revendication 1, dans laquelle le réservoir de stockage (32) comporte au moins un tube de stockage (34), s'étendant entre une première extrémité (34A), connectée au circuit de circulation (28) pour être reliée d'une part à la pompe (16) et d'autre part au générateur d'énergie (36), et une seconde extrémité (34B).

3. Installation (10) selon la revendication 2, dans laquelle chaque tube (34) comporte une première partie remplie d'air, et une seconde partie remplie du fluide, les première et seconde parties étant séparées par un organe d'étanchéité mobile, par exemple un piston muni d'un joint d'étanchéité.

4. Installation (10) selon la revendication 3, dans laquelle chaque tube (34) est incliné par rapport à un plan horizontal, de sorte que sa seconde extrémité (34B) se trouve au-dessus de sa première extrémité (34A) dans une direction verticale, la première partie remplie d'air étant disposée à proximité de cette seconde extrémité (34B).

5. Installation (10) selon l'une quelconque des revendications précédentes, comportant au moins un circuit (44) de circulation de fluide basse pression, reliant une sortie de chaque générateur d'énergie (36) à une entrée de chaque pompe (16).

6. Installation (10) selon l'une quelconque des revendications précédentes, dans laquelle chaque générateur d'énergie (36) comporte au moins une turbine (40) destinée à être entrainée par le fluide sous pression provenant du réservoir de stockage (32), par exemple une turbine Pelton.

7. Installation (10) selon la revendication 6, comportant une pluralité de générateurs d'énergie (36), comprenant des turbines (40) de dimensions différentes, le circuit de circulation (28) étant agencé pour diriger spécifiquement le fluide sous pression vers une ou plusieurs turbines (40) en particulier.

8. Installation (10) selon l'une quelconque des revendications précédentes, dans laquelle chaque pompe (16) est choisie parmi une pompe à plateau ou une pompe triplex.

9. Installation (10) selon l'une quelconque des revendications précédentes, dans laquelle le dispositif de fourniture d'énergie mécanique (12) est alimenté par une énergie renouvelable, et il est par exemple formé par une éolienne, notamment une éolienne à axe vertical.

10. Installation (10) selon l'une quelconque des revendications précédentes, dans laquelle :
- le dispositif de fourniture d'énergie mécanique (12) comporte un arbre de sortie (14), solidaire d'une couronne dentée (24),
- chaque pompe (16) est actionnée par un pignon (18) entrainé en rotation par ladite couronne dentée (24), de préférence par l'intermédiaire d'une roue de réduction dentée (26).

11. Installation (10) selon la revendication 10, comportant au moins un organe de freinage (25), relié à la couronne dentée (24) de manière à pouvoir limiter sa vitesse, chaque organe de freinage (25) comportant par exemple au moins un frein magnétique, un frein à courant de Foucault et/ou un frein à disques.

12. Installation (10) selon l'une quelconque des revendications précédentes, dans laquelle l'actionnement de chaque pompe (16) est désactivable.

13. Installation (10) selon l'une quelconque des revendications précédentes, dans laquelle le fluide est de l'eau.

## Patentansprüche

1. Anlage (10) zur Energiespeicherung, die für die Versorgung eines Stromnetzes mit elektrischer Energie bestimmt ist, **dadurch gekennzeichnet, dass** sie Folgendes umfasst:
- mindestens eine Vorrichtung (12) zur Bereitstellung von mechanischer Energie,
- mindestens einen Behälter (32) zur Speicherung eines unter Druck stehenden Fluids,
- mindestens eine Pumpe (16), die durch die Vorrichtung (12) zur Bereitstellung mechanischer Energie betätigbar ist, wobei jede Pumpe (16) direkt durch die mechanische Energie aus der entsprechenden Vorrichtung (12) zur Bereitstellung mechanischer Energie angetrieben wird,
- mindestens einen Energiegenerator (36), der geeignet ist, um die Energie des unter Druck stehenden Fluids in elektrische Energie umzuwandeln, wobei der Energiegenerator (36) geeignet ist, um mit einem Stromnetz verbunden zu werden, um es mit elektrischer Energie zu versorgen,
- einen Kreislauf (28) für Fluidzirkulation, der einerseits die Pumpe (16) mit dem Speicherbehälter (32) verbindet, um dort Fluid einzuspritzen, wenn sie betätigt wird, und andererseits den Speicherbehälter (32) mit dem Energieerzeuger (36) verbindet, der Zirkulationskreislauf (28) umfassend mindestens ein Ventil, das zwischen dem Speicherbehälter (32) und dem Energieerzeuger (36) angeordnet ist, wobei das Ventil zwischen einer offenen Position, die Versorgung des Generators für elektrische Energie (36) mit Druckfluid zulässt, und einer geschlossenen Position, die Versorgung des Generators für elektrische Energie (36) mit Druckfluid unterbindet, betätigbar ist.

2. Anlage (10) nach Anspruch 1, bei der der Speicherbehälter (32) mindestens ein Speicherrohr (34) umfasst, das sich zwischen einem ersten Ende (34A), das mit dem Zirkulationskreislauf (28) verbunden ist, um einerseits mit der Pumpe (16) und andererseits mit dem Energieerzeuger (36) verbunden zu werden, und einem zweiten Ende (34B) erstreckt.

3. Anlage (10) nach Anspruch 2, wobei jedes Rohr (34) einen ersten Abschnitt, der mit Luft gefüllt ist, und einen zweiten Abschnitt, der mit dem Fluid gefüllt ist, umfasst, wobei der erste und der zweite Abschnitt durch ein bewegliches Dichtungsorgan, z. B. einen mit einer Dichtung versehenen Kolben, voneinander getrennt sind.

4. Anlage (10) nach Anspruch 3, wobei jedes Rohr (34) in Bezug auf eine horizontale Ebene geneigt ist, sodass sein zweites Ende (34B) in einer vertikalen Richtung über seinem ersten Ende (34A) ist, wobei der erste luftgefüllte Abschnitt in der Nähe dieses zweiten Endes (34B) angeordnet ist.

5. Anlage (10) nach einem der vorherigen Ansprüche, umfassend mindestens einen Kreislauf (44) zur Zirkulation von Niederdruckfluid, der einen Ausgang von jedem Energieerzeuger (36) mit einem Eingang jeder Pumpe (16) verbindet.

6. Anlage (10) nach einem der vorherigen Ansprüche, wobei jeder Energieerzeuger (36) mindestens eine Turbine (40) umfasst, die von dem Druckfluid aus dem Speicherbehälter (32) angetrieben werden soll, zum Beispiel eine Pelton-Turbine.

7. Anlage (10) nach Anspruch 6, umfassend eine Vielzahl von Energieerzeugern (36), umfassend Turbinen (40) unterschiedlicher Größe, wobei der Zirkulationskreislauf (28) angeordnet ist, um insbesondere das Druckfluid spezifisch zu einer oder mehreren Turbinen (40) zu leiten.

8. Anlage (10) nach einem der vorherigen Ansprüche, wobei jede Pumpe (16) ausgewählt ist aus einer Tellerpumpe oder einer Triplexpumpe.

9. Anlage (10) nach einem der vorherigen Ansprüche, wobei die Vorrichtung zur Bereitstellung mechanischer Energie (12) durch erneuerbare Energie versorgt wird und beispielsweise durch eine Windkraftanlage, insbesondere eine Windkraftanlage mit vertikaler Achse, gebildet ist.

10. Anlage (10) nach einem der vorherigen Ansprüche, wobei:
- die Vorrichtung zur Bereitstellung von mechanischer Energie (12) eine Ausgangswelle (14) umfasst, die fest mit einem Zahnkranz (24) verbunden ist,
- jede Pumpe (16) durch ein Ritzel (18) angetrieben wird, das durch den Zahnkranz (24) in Drehung versetzt wird, vorzugsweise über ein gezahntes Untersetzungsrad (26).

11. Anlage (10) nach Anspruch 10, umfassend mindestens ein Bremsorgan (25), das mit dem Zahnkranz (24) verbunden ist, um dessen Geschwindigkeit zu begrenzen, jedes Bremsorgan (25) umfassend beispielsweise mindestens eine Magnetbremse, eine Wirbelstrombremse und/oder eine Scheibenbremse.

12. Anlage (10) nach einem der vorherigen Ansprüche, wobei die Betätigung von jeder Pumpe (16) deaktiviert werden kann.

13. Anlage (10) nach einem der vorherigen Ansprüche, wobei das Fluid Wasser ist.

## Claims

1. An energy storage installation (10), intended to supply electrical energy to an electrical network, **characterised in that** it comprises:
- at least one device (12) for supplying mechanical energy,
- at least one storage tank (32) for a pressurised fluid,
- at least one pump (16), operable by the mechanical energy supply device (12), each pump (16) being directly operated by mechanical energy from the corresponding mechanical energy supply device (12),
- at least one energy generator (36), suitable for converting the energy of the pressurised fluid into electrical energy, said energy generator (36) being suitable for being connected to an electrical network for supplying it with electrical energy,
- a fluid circulation circuit (28), connecting on the one hand the pump (16) to the storage tank (32), so as to inject fluid into it when it is operated, and connecting on the other hand the storage tank (32) to the energy generator (36), the circulation circuit (28) comprising at least one valve arranged between the storage tank (32) and the energy generator (36), said valve being operable between an open position allowing the supply of pressurised fluid to the electrical energy generator (36) and a closed position preventing the supply of pressurised fluid to the electrical energy generator (36).

2. The installation (10) according to claim 1, wherein the storage tank (32) comprises at least one storage tube (34), extending between a first end (34A), connected to the circulation circuit (28) to be connected on the one hand to the pump (16) and on the other hand to the energy generator (36), and a second end (34B).

3. The installation (10) according to claim 2, wherein each tube (34) comprises a first air-filled portion, and a second fluid-filled portion, the first and second portions being separated by a movable sealing member, for example a piston provided with a seal.

4. The installation (10) according to claim 3, wherein each tube (34) is inclined with respect to a horizontal plane so that its second end (34B) is above its first end (34A) in a vertical direction, the first air-filled portion being disposed in the vicinity of this second end (34B).

5. The installation (10) according to any of the preceding claims, comprising at least one low-pressure fluid circulation circuit (44), connecting an outlet of each energy generator (36) to an inlet of each pump (16).

6. The installation (10) according to any of the preceding claims, wherein each power generator (36) comprises at least one turbine (40) to be driven by the pressurised fluid from the storage tank (32), for example a Pelton turbine.

7. The installation (10) according to claim 6, comprising a plurality of power generators (36), comprising turbines (40) of different sizes, the circulation circuit (28) being arranged to specifically direct pressurised fluid to one or more turbines (40) in particular.

8. The installation (10) according to any of the preceding claims, wherein each pump (16) is selected from a platen pump or a triplex pump.

9. The installation (10) according to any of the preceding claims, wherein the mechanical energy supply device (12) is powered by renewable energy, and is for example formed by a wind turbine, in particular a vertical-axis wind turbine.

10. The installation (10) according to any one of the preceding claims, wherein:
- the mechanical energy supply device (12) has an output shaft (14), which is integral with a ring gear (24),
- each pump (16) is driven by a pinion (18) rotated by said ring gear (24), preferably via a reduction gear (26).

11. The installation (10) according to claim 10, comprising at least one brake member (25) which is connected to the ring gear (24) in such a way that its speed can be limited, wherein each brake member (25) comprises, for example, at least one magnetic brake, an eddy current brake and/or a disc brake.

12. The installation (10) according to any one of the preceding claims, wherein the actuation of each pump (16) can be disabled.

13. The installation (10) according to any of the preceding claims, wherein the fluid is water.
